(19) **Europäisches Patentamt / European Patent Office / Office européen des brevets**

(11) **EP 4 132 823 B1**

(12) **FASCICULE DE BREVET EUROPEEN**

(45) Date de publication et mention de la délivrance du brevet:
**17.09.2025 Bulletin 2025/38**

(21) Numéro de dépôt: **21717406.9**

(22) Date de dépôt: **07.04.2021**

(51) Classification Internationale des Brevets (IPC):
**B60T 13/74** *(2006.01)*    **B60T 17/22** *(2006.01)*
**F16D 51/22** *(2006.01)*    **F16D 65/18** *(2006.01)*

(52) Classification Coopérative des Brevets (CPC):
**B60T 17/22; B60T 13/741; B60T 17/221; F16D 51/22; F16D 65/183;** F16D 2066/003; F16D 2066/005; F16D 2121/14; F16D 2121/24; F16D 2125/40

(86) Numéro de dépôt international:
**PCT/EP2021/058991**

(87) Numéro de publication internationale:
**WO 2021/204833 (14.10.2021 Gazette 2021/41)**

(54) **PROCÉDÉ ET DISPOSITIF DE COMMANDE D'UN FREIN DE VÉHICULE AUTOMOBILE**

VERFAHREN UND VORRICHTUNG ZUR STEUERUNG EINER KRAFTFAHRZEUGBREMSE

METHOD AND DEVICE FOR CONTROLLING A MOTOR VEHICLE BRAKE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.04.2020 FR 2003583**

(43) Date de publication de la demande:
**15.02.2023 Bulletin 2023/07**

(73) Titulaire: **Hitachi Astemo France**
**93700 Drancy (FR)**

(72) Inventeurs:
• **AYACHE, Marc**
**75002 PARIS (FR)**
• **RAMIREZ HERNANDEZ, Carlos Eduardo**
**92130 ISSY LES MOULINEAUX (FR)**
• **PASQUET, Thierry**
**94300 VINCENNES (FR)**

(74) Mandataire: **LLR**
**2, rue Jean Lantier**
**75001 Paris (FR)**

(56) Documents cités:
EP-A1- 3 156 294    EP-A2- 2 853 455
US-A1- 2004 238 299    US-A1- 2012 193 177
US-A1- 2014 069 750    US-A1- 2019 257 378

**Description**

L'invention se rapporte à un procédé de commande d'un frein de véhicule automobile et à un dispositif comprenant des moyens pour mettre en œuvre un tel procédé. Le document US2012/193177A1 divulgue un procédé de commande de freinage pour un frein de véhicule, utiliser un abaque établissant une correspondance entre une position liée à une position de l'organe de serrage et un force de serrage.

On connaît déjà dans l'état la technique un frein de véhicule automobile comprenant :

- au moins une garniture de frein destinée à coopérer avec un organe de friction du frein ; et
- un organe de serrage de la garniture activé par un moteur électrique et apte à se déplacer contre l'organe de friction.

On a en outre déjà proposé dans l'état de la technique différents procédés de détermination de la force de serrage d'une garniture de frein contre un organe de friction du frein :

- soit en mesurant directement la force de serrage par un capteur de force ;
- soit en déterminant une valeur de la course de l'organe de serrage du frein nécessaire pour appliquer une force de serrage prédéterminée.

Dans le second cas, la valeur de la course est déterminée, par exemple en laboratoire, pour toute la durée d'utilisation du frein. Ceci conduit :

- soit à des forces de serrage ou de desserrage surévaluées, entraînant une usure prématurée des éléments du frein ;
- soit, en cas d'usure très prononcée du frein, à un retard de serrage du frein, voire à une impossibilité d'immobilier le véhicule efficacement dans certaines configurations de stationnement du véhicule.

L'invention a notamment pour but d'optimiser le procédé de freinage en prenant en compte l'usure des éléments du frein, notamment sans recourir à un capteur de force.

À cet effet, l'invention a pour objet un procédé de commande d'un frein de véhicule automobile, ce frein comportant :

- au moins une garniture de frein destinée à coopérer avec un organe de friction du frein ;
- un organe de serrage de la garniture contre l'organe de friction activé par un moteur électrique ;

le procédé étant **caractérisé en ce que**
lors d'une étape d'activation ou de désactivation du frein,
on crée ou on met à jour un abaque établissant une correspondance entre uneposition liée à une position de l'organe de serrage, dite position de l'organe de serrage, et une force de serrage ou de desserrage de l'organe de serrage, en calculant la position de l'organe de serrage et la force de serrage à partir de paramètres de fonctionnement d'éléments d'une chaîne cinématique reliant un arbre du moteur à l'organe de serrage, dits paramètres de référence.

Ainsi, l'invention permet la création et la mise à jour de l'abaque afin d'adapter les valeurs de force de serrage/desserrage et de position de l'organe de serrage en fonction de l'usure des éléments du frein. De cette manière, les positions de l'organe de serrage correspondant aux forces de serrage ou de desserrage optimales sont contrôlées sans que ces forces soient surévaluées ou sous-évaluées. En outre, l'estimation des forces se fait sans utiliser de capteur de force, tout en obtenant des valeurs de force de serrage/ desserrage et de position de l'organe de serrage très satisfaisantes.

Le procédé selon la présente invention peut présenter en outre une ou plusieurs des caractéristiques suivantes prises seules ou en combinaison.

Avantageusement, les paramètres de référence comprenant la tension d'alimentation du moteur, le courant d'alimentation du moteur et des paramètres mécaniques du moteur.

Ainsi, il est possible d'obtenir la vitesse de rotation du moteur et le couple du moteur à partir de ces paramètres de référence.

Avantageusement, le frein comprend des moyens de transmission de mouvement reliant l'arbre du moteur à l'organe de serrage, ces moyens de transmission de mouvement comprenant un ensemble vis/écrou transformant le mouvement de rotation issu de l'arbre du moteur en mouvement de translation de l'organe de serrage, les paramètres de référence comprenant de plus un rapport entre la rotation de la vis et le déplacement de l'écrou, dit rapport de pas de vis ou un rapport entre la rotation de l'écrou et le déplacement de la vis, dit pas d'écrou.

Ainsi, il est possible d'obtenir la position de l'organe de serrage ainsi que la force de serrage ou de desserrage de l'organe de serrage à partir de ces paramètres de référence.

Avantageusement, les moyens de transmission de mouvement comprennent des moyens à engrenages de démultiplication du mouvement entre l'arbre du moteur et la vis de l'ensemble vis/écrou, les paramètres de référence comprenant de plus un rapport de démultiplication associé aux moyens de démultiplication.

Ainsi, il est possible d'obtenir la vitesse de rotation de la vis et le couple de la vis à partir de ces paramètres de référence.

Avantageusement, lors d'une étape d'activation ou de désactivation du frein, on estime la valeur de la force de serrage ou de desserrage de l'organe de serrage en fonction de la position de l'organe de serrage et de la valeur correspondante de la force de serrage ou de desserrage donnée par l'abaque.

Ainsi, la force de serrage ou de desserrage correspondant à une position de l'organe de serrage peut être estimée avec précision grâce aux valeurs de l'abaque.

Avantageusement, on crée ou on met à jour l'abaque en calculant des positions successives de l'organe de serrage et des forces de serrage ou de desserrage correspondantes à partir des paramètres de référence, en enregistrant les positions successives de l'organe de serrage et les forces correspondantes de serrage ou de desserrage et en comparant la force de serrage ou de desserrage à un seuil prédéterminé, l'enregistrement des positions successives de l'organe de serrage et des forces correspondantes de serrage ou de desserrage étant interrompu lorsque la force de serrage ou de desserrage franchit le seuil prédéterminé.

Ainsi, les forces de serrage ou de desserrage avec lesquelles les garnitures serrent l'organe de friction sont maintenues sensiblement constantes malgré l'usure des éléments du frein.

Avantageusement, la mise à jour de l'abaque se fait périodiquement après un nombre prédéterminé d'activation du frein ou de désactivation du frein entre chaque mise à jour de l'abaque.

Ainsi, l'abaque est régulièrement mis à jour pour tenir compte de l'usure d'éléments du frein. Par ailleurs, il est possible de suivre l'usure de différents éléments du frein, notamment des garnitures, à intervalles de temps réguliers, à partir de l'évolution des valeurs de l'abaque.

L'invention a également pour objet un dispositif de commande d'un frein de véhicule automobile, **caractérisé en ce qu'**il comprend des moyens mettant en œuvre un procédé selon l'invention, par exemple un support d'enregistrement de moyens logiciels.

Le frein qui est commandé est, par exemple, un frein à tambour ou un frein à disque, ce frein étant apte à fonctionner en mode électromécanique et/ou hydraulique.

Ainsi, dispositif de commande de frein selon l'invention peut remplir une fonction de freinage de véhicule en roulage (ou freinage de service), une fonction de frein de stationnement, une fonction de frein de secours, ou une fonction d'assistance de démarrage en côte.

## Brève description des figures

L'invention sera mieux comprise à la lecture de la description qui va suivre donnée uniquement à titre d'exemple et faite en se référant aux dessins annexés dans lesquels :

[Fig.1] la [Fig.1] est une vue de face d'un frein à tambour de véhicule automobile commandé par un procédé selon l'invention ;

[Fig.2] la [Fig.2] est une vue partielle en perspective du frein de la [Fig.1] ;

[Fig.3] la [Fig.3] est un schéma cinématique de moyens de transmission de mouvement reliant un arbre de moteur à un organe de serrage du frein illustré sur les figures 1 et 2 ;

[Fig.4] la [Fig.4] est une vue en perspective éclatée d'un frein à disque de véhicule automobile commandé par un procédé selon l'invention ;

[Fig.5] la [Fig.5] est une vue du frein de la [Fig.4] selon la flèche V de la [Fig.4] ;

[Fig.6] la [Fig.6] est un schéma fonctionnel de différents organes d'un frein de véhicule automobile, notamment du frein des figures 1 ou 4, susceptible d'être commandé par le procédé selon l'invention ;

[Fig.7] la [Fig.7] est un organigramme illustrant le procédé selon l'invention ;

[Fig.8] la [Fig.8] est un exemple illustrant l'évolution de la position de l'organe de serrage en fonction du temps lors de l'activation d'un frein, notamment du frein des figures 1 ou 4 ;

[Fig.9] la [Fig.9] illustre un exemple d'évolution de la force de serrage lors de l'activation d'un frein, notamment du frein des figures 1 ou 4 ;

[Fig.10] la [Fig.10] illustre un exemple d'abaque obtenu à partir des figures 8 et 9 ;

[Fig.11] la [Fig.11] illustre un exemple d'évolution de la position de l'organe de serrage lors d'une opération de serrage et de desserrage de frein, en fonction du temps ;

[Fig.12] la [Fig.12] illustre un exemple d'évolution de la force de serrage et de desserrage de frein en fonction du temps déduite à partir d'un abaque et de la position de l'organe de serrage de la [Fig.11].

## Description détaillée

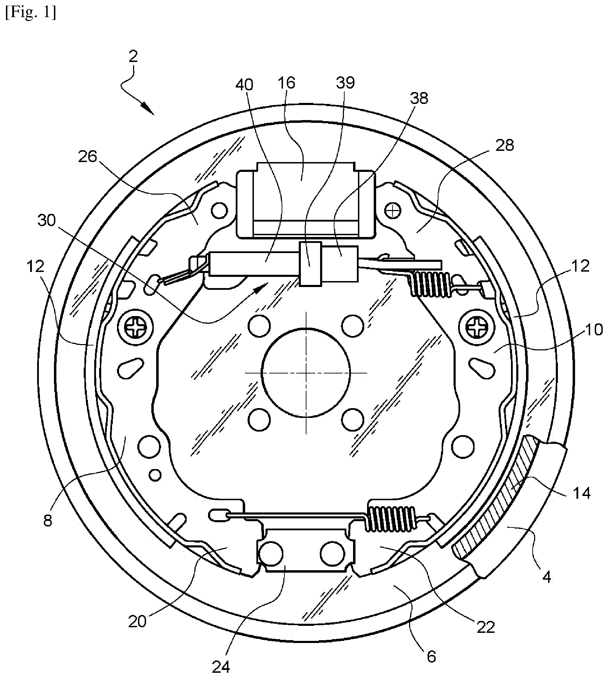

On a représenté sur les figures 1 à 3 un frein à tambour de véhicule automobile commandé par un procédé selon l'invention, désigné par la référence générale 2.

Ce frein à tambour 2 est décrit plus en détail dans le document FR 3 031 151 A dont le contenu doit être considéré comme faisant partie de la présente demande.

On voit notamment en se référant à la [Fig.1] que le frein à tambour 2 comprend un tambour 4 qui est coaxial à une roue du véhicule (non-représenté) dont il est solidaire. Le tambour 4 est mobile par rapport à un plateau 6 qui porte une paire de segments 8, 10 sensiblement diamétralement opposés disposés à l'intérieur du tambour 4. Ces segments 8, 10 forment chacun un organe de serrage. En effet, chaque segment 8, 10 est revêtu d'une garniture 12 de friction destinée à coopérer par friction avec un organe de friction comprenant une piste de frottement 14 formée par une surface intérieure du tambour 4.

Le freinage de la roue est réalisé par écartement des segments 8, 10 jusqu'à mise en contact avec la piste de frottement du tambour 4. L'écartement des segments 8, 10 peut être réalisé par des organes d'actionnement hydraulique 16 et/ou électromécanique 18.

Chaque segment 8, 10 forme un levier dont une première extrémité 20, 22 est en appui sur un élément solidaire 24 du plateau 6 dit élément d'ancrage et dont une seconde extrémité 26, 28 est mobile.

Pour assurer le freinage de la roue lors du roulage du véhicule (fonctionnement du frein en mode de frein de service), le frein à tambour 2 comprend un organe d'actionnement hydraulique 16 formé par un vérin hydraulique, muni de pistons, dit « cylindre de roue » (voir [Fig.1]). L'extrémité mobile 26, 28 de chaque segment 8, 10 coopère dans ce cas avec le cylindre de roue 16.

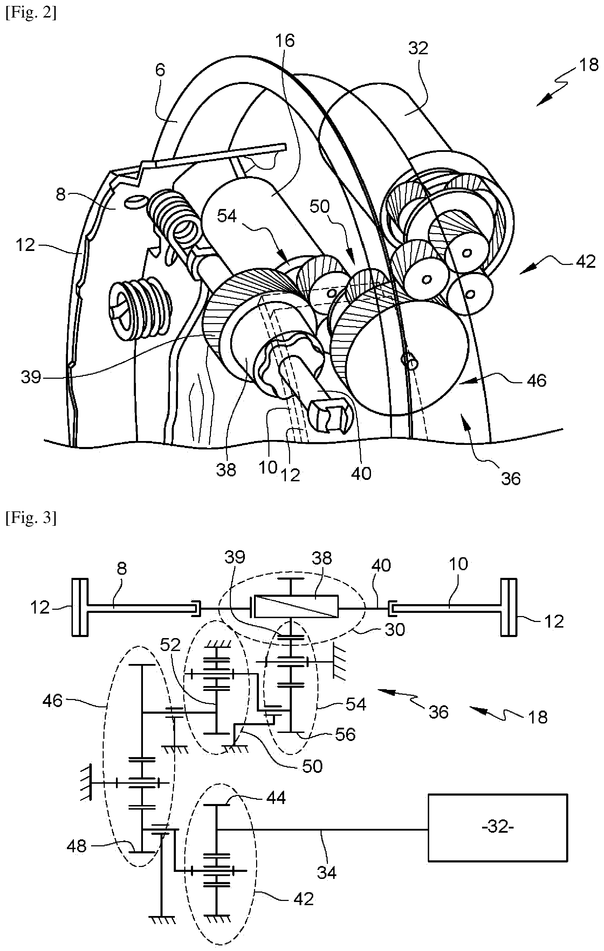

Pour assurer le freinage de la roue dans d'autre modes de fonctionnement du véhicule, notamment lors du stationnement du véhicule (fonctionnement du frein en mode de frein de parking), le frein à tambour comprend également (voir figures 2 et 3), un organe d'actionnement électromécanique 18 comprenant un ensemble vis/écrou 30 s'étendant entre les extrémités mobiles 26, 28 des segments.

L'organe d'actionnement électromécanique 18 est activé par un moteur électrique 32, situé sur un côté opposé du plateau 6 par rapport aux segments 8, 10 (voir [Fig.2]). Un arbre 34 du moteur 32 est relié cinématiquement à l'organe d'actionnement électromécanique 18 par des moyens de transmission de mouvement 36.

Ces moyens de transmission de mouvement 36 sont de type classique et comprennent des moyens à engrenages de démultiplication du mouvement entre l'arbre 34 du moteur et l'écrou 38 ou la vis 40 de l'ensemble vis/écrou 30.

On notera que l'ensemble vis /écrou 30 transforme le mouvement de rotation issu de l'arbre 34 du moteur en mouvement de translation de l'organe de serrage, à savoir en mouvement de translation des extrémités 26, 28 mobiles des segments 8, 10.

On comprend donc que le frein à tambour 2 comprend des moyens de transmission de mouvement 36 reliant l'arbre 34 du moteur à l'organe de serrage (chaque segment 8, 10), l'ensemble vis/écrou 30 de ces moyens de transmission de mouvement 36 transformant le mouvement de rotation issu de l'arbre 34 du moteur en mouvement comportant au moins une composante de translation de l'organe de serrage (chaque extrémité libre 26, 28 d'un segment 8, 10).

Plus particulièrement, les moyens à engrenage 36 comprennent (voir [Fig.3]) :

-	un premier train épicycloïdal 42 entraîné en entrée 44 par l'arbre 34 du moteur électrique 32 ;
-	une première cascade intermédiaire 46 entraînée en entrée 48 par le premier train épicycloïdal 42 ;
-	un deuxième train épicycloïdal 50 entraîné en entrée 52 par la première cascade intermédiaire 46 ; et
-	une deuxième cascade intermédiaire 54 entraînée en entrée 56 par le deuxième train épicycloïdal 50.

La deuxième cascade intermédiaire 54 est couplée à la denture extérieure 39 de l'écrou 38 de l'ensemble vis/écrou 30.

Le déplacement relatif entre l'écrou 38 et la vis 40 de l'ensemble vis/écrou 30 par vissage ou dévissage provoque l'écartement ou le rapprochement des extrémités libres 26, 28 des segments 8, 10 entre lesquels s'étend l'ensemble vis/écrou 30.

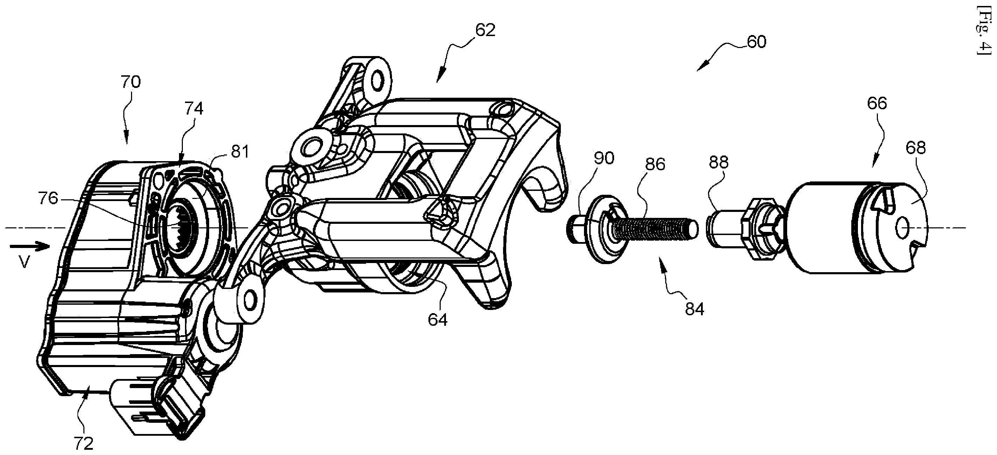

On a représenté sur les figures 4 à 5 un frein à disque de véhicule automobile commandé par un procédé selon l'invention, désigné par la référence générale 60.

Ce frein à disque 60 est décrit plus en détail dans le document FR 2 999 509 A dont le contenu doit être considéré comme faisant partie de la présente demande.

Sur la [Fig.4], le frein 60 à disque comprend un étrier 62 comportant une cavité axiale 64 dans laquelle un piston 66 est monté coulissant axialement de manière étanche dans deux sens opposés. Le piston 66 du frein a une forme générale cylindrique circulaire ouverte à une extrémité et fermée à une autre extrémité par une face transversale externe 68. Le piston 66 est apte à coopérer par sa face transversale externe 68 avec une des garnitures (non-représentées) du frein.

Lors du freinage, le piston 66 sollicite une des garnitures du frein contre le disque (non-représenté) formant un organe de friction. Le piston 66 forme ainsi un organe de serrage pour le frein à disque 60.

Le frein à disque 60 comprend également des organes d'actionnement hydraulique et électromécanique 70 comme dans le cas du frein à tambour 2.

L'organe d'actionnement hydraulique comporte le piston 66 coulissant dans la cavité axiale 64 qui forme une chambre hydraulique. En fonctionnement, la pression hydraulique dans la cavité axiale 64 provoque la poussée axiale du piston 66 vers l'une des garnitures.

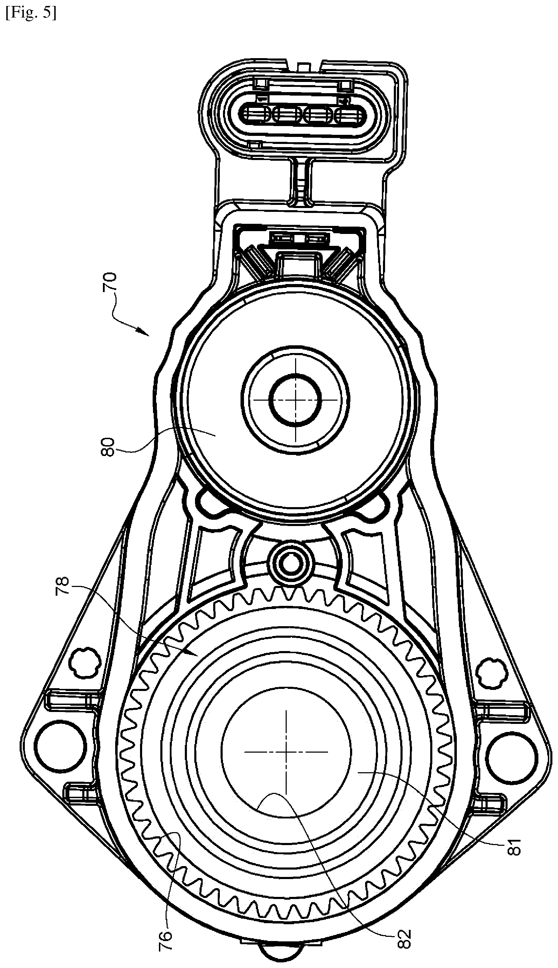

L'organe d'actionnement électromécanique 70 comporte un boîtier 72 fixé sur une face transversale arrière de l'étrier 62. Le boîtier 72 présente une face transversale ouverte 74 alignée par rapport à la cavité axiale 64 de l'étrier 62. Le boîtier 72 contient un mécanisme réducteur à engrenages à train épicycloïdal 76 (voir [Fig.5]), agencé dans un premier logement 78 du boîtier, et un moteur électrique (non-représenté) agencé dans un deuxième logement 80 du boîtier.

Sur la [Fig.5], on voit plus en détails les deux logements 78, 80 du boîtier. Le premier logement 78 est fermé axialement par une paroi annulaire de fond 81. La paroi annulaire de fond 81 comporte un orifice central 82 pour le passage d'un élément de sortie du train épicycloïdal 76, ledit élément formant l'élément de sortie de mouvement de l'organe d'actionnement électromécanique 70.

Le boîtier 72 comporte le deuxième logement 80 ouvert axialement vers l'arrière et agencé pour loger le moteur électrique (non-représenté).

L'arbre du moteur électrique est relié par des moyens à engrenages classiques non représentés au train épicycloïdal 76 logé dans le premier logement 78.

L'organe d'actionnement électromécanique 70 comprend un ensemble 84 comprenant une vis d'entraînement 86 coopérant par vissage avec un écrou de poussée axiale 88. L'écrou 88 est logé dans le piston 66 en étant solidaire de ce piston 66.

Les moyens à engrenages classiques et le train épicycloïdal 76 forment des moyens de transmission de mouvement comprenant des moyens à engrenages de démultiplication du mouvement entre l'arbre du moteur et la vis 86 de l'ensemble vis/ écrou 84.

On notera que l'ensemble vis /écrou 84 transforme le mouvement de rotation issu de l'arbre du moteur en mouvement de translation de l'organe de serrage, à savoir en mouvement de translation du piston 66.

Ainsi la rotation de la vis 86 fait coulisser l'écrou 88 solidairement avec le piston 66 à l'intérieur de la cavité axiale 64. La vis 86 comporte une tête d'entraînement 90 destinée à être entraînée en rotation dans deux sens opposés par l'élément de sortie du train épicycloïdal 76, à travers la face transversale ouverte 74 du boîtier 72.

On comprend donc que le frein à disque 60 comprend des moyens de transmission de mouvement (moyens à engrenages et train épicycloïdal 76) reliant l'arbre du moteur à l'organe de serrage (piston 66), l'ensemble vis/écrou 84 de ces moyens de transmission de mouvement transformant le mouvement de rotation issu de l'arbre du moteur en mouvement de translation de l'organe de serrage (piston 66).

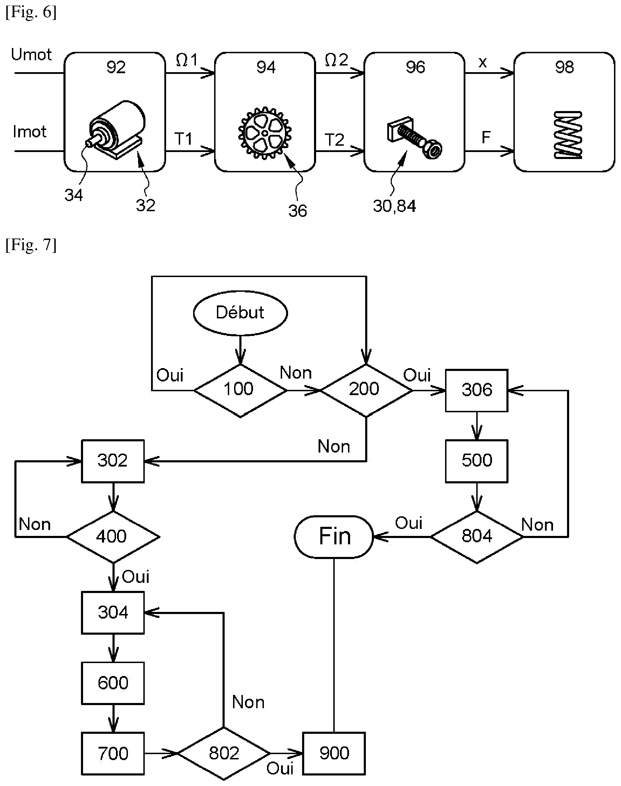

On a représenté sur la [Fig.6] un schéma fonctionnel illustrant des blocs fonctionnels, communs aux freins à tambour 2 et à disque 60 décrits ci-dessus, activés lors de l'actionnement électromécanique d'un frein de véhicule automobile.

On a également représenté sur cette figure les paramètres issus des blocs fonctionnels lors de l'actionnement électromécanique.

De gauche à droite, le premier bloc 92 schématise le moteur électrique 32 du frein à tambour 2 ou du frein à disque 60, muni de l'arbre moteur 34. Ce moteur est alimenté par une tension Umot et un courant Imot destinés à être mesurés. A partir du courant et de la tension appliquées au moteur électrique, on obtient le couple T1 du moteur et la vitesse angulaire $\Omega 1$ de l'arbre du moteur.

Le deuxième bloc 94 schématise les moyens de transmission du frein à tambour 2 ou du frein à disque 60, comportant des trains épicycloïdaux. Ces moyens de transmission forment des moyens à engrenages de démultiplication du mouvement entre l'arbre 34 du moteur et la vis ou l'écrou de l'ensemble vis/écrou. Ce bloc 94 reçoit en entrée la vitesse angulaire Ω1 et le couple T1 du moteur et démultiplie ces paramètres par un rapport de démultiplication associé aux moyens à engrenages pour obtenir la vitesse angulaire Ω2 et le couple T2 de la vis ou de l'écrou.

Le troisième bloc 96 schématise l'ensemble vis/écrou du frein à tambour 2 ou du frein à disque 60, cet ensemble vis/écrou recevant en entrée la vitesse angulaire Ω2 et le couple T2. Ici, on considère que la position de l'ensemble vis-écrou est sensiblement identique à celle de l'organe de serrage. Bien entendu, l'organe de serrage se déplace à la même vitesse que la vis ou l'écrou de l'ensemble vis/écrou.

Le quatrième bloc 98 schématise les forces élastiques habituelles d'éléments du frein à tambour 2 ou du frein à disque 60 apparaissant sous l'effet de la position x de l'organe de serrage et de la force de serrage F.

On décrira ci-dessous un procédé selon l'invention de commande d'un frein de véhicule automobile, par exemple d'un frein à tambour 2 ou d'un frein à disque 60 tel que décrit ci-dessus.

Selon ce procédé, lors d'une étape d'activation ou de désactivation du frein, on crée ou on met à jour un abaque. L'abaque établit une correspondance entre une position liée à une position de l'organe de serrage, dite position de l'organe de serrage, et une force de serrage ou de desserrage de l'organe de serrage. Pour ce faire, on calcule la position de l'organe de serrage et la force de serrage à partir de paramètres de fonctionnement d'éléments d'une chaîne cinématique reliant l'arbre du moteur à l'organe de serrage, dits paramètres de référence.

Dans le cas du frein à tambour 2, l'organe de serrage est formé par les segments 8, 10. Dans le cas du frein à disque 60, l'organe de serrage est formé par le piston 66. On rappellera que l'arbre et le moteur sont représentés sur les figures que dans le cas du frein à tambour (voir [Fig.3] : arbre 34 du moteur 32).

Les paramètres de référence comprennent la tension d'alimentation du moteur, le courant d'alimentation du moteur et des paramètres mécaniques du moteur.

Les paramètres de référence comprennent de plus un rapport entre la rotation de la vis 86 et le déplacement de l'écrou 88, dit rapport de pas de vis ou le rapport entre la rotation de l'écrou 38 et le déplacement de la vis 40, dit rapport de pas d'écrou.

Les paramètres de référence comprennent encore un rapport de démultiplication associé aux moyens de démultiplication.

Dans le cas du frein à tambour 2, les moyens de démultiplication du mouvement sont formés par les moyens à engrenages 36 comprenant des trains épicycloïdaux 42, 46, 50, 54.

Dans le cas du frein à disque 60, les moyens de démultiplication du mouvement sont formés par les moyens à engrenages classiques et le train épicycloïdal 76.

La force de serrage ou de desserrage, notée Fs, est établie par la relation (1) suivante, à partir de paramètres de référence évoqués ci-dessus :

[Math.1]

$$F_s = \frac{k_{mot}(I - I_i) - 2\pi * J_r \frac{d\omega}{dt} * \eta * ratio}{\text{ssp}} \quad (1)$$

Les définitions des paramètres de référence utilisés dans cette relation sont les suivantes.

kmot correspond à une constante du moteur électrique permettant de déterminer ou estimer le couple à la sortie du moteur électrique. Cette constante est décrite plus en détail dans le document US 2016 103 430 A1 dont le contenu doit être considéré comme faisant partie de la présente demande.

I correspond au courant alimentant le moteur et Ii correspond au courant lorsque le moteur est à l'arrêt.

Jr correspond au moment d'inertie de l'arbre du moteur.

ω correspond à la vitesse angulaire de l'arbre du moteur. dω/dt correspond donc à l'accélération angulaire de l'arbre du moteur.

η correspond au rapport de démultiplication associé aux moyens de démultiplication.

ratio correspond à une constante.

ssp correspond au rapport de pas de vis ou au rapport de pas d'écrou.

On a représenté sur la [Fig.7] un organigramme illustrant de façon non-limitative le procédé selon l'invention.

Dans un premier temps, on vérifie si le freinage est actif ou inactif (étape 100).

Ensuite, on vérifie si un abaque a été déjà créé (étape 200).

Si aucun abaque n'a été créé, un abaque établissant une correspondance entre une position liée à une position de l'organe de serrage et une force de serrage ou de desserrage est créé. Pour cela, on relève d'abord la vitesse et les positions de l'organe de serrage (étape 302) jusqu'à ce que l'organe de serrage du frein atteigne la fin de sa course (étape 400).

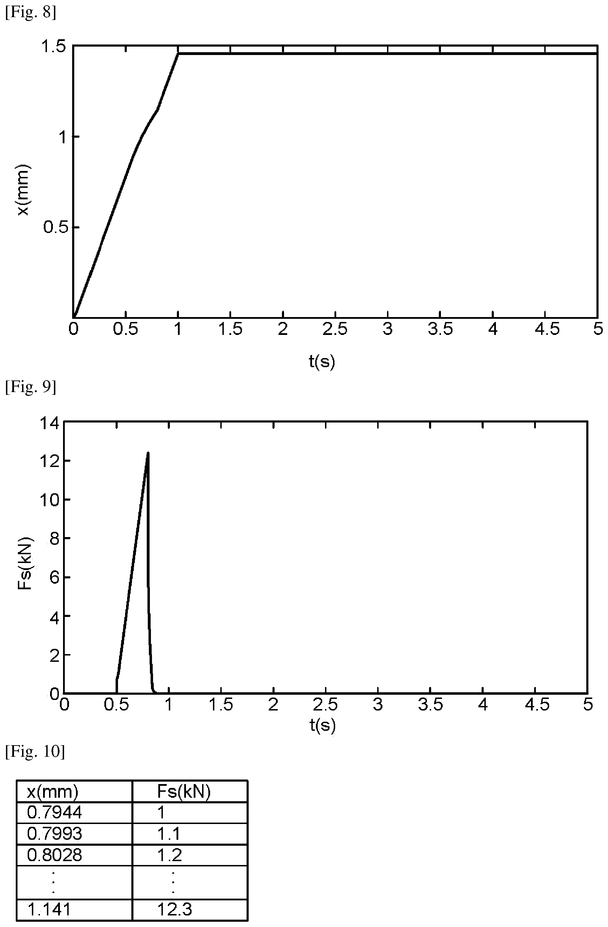

À titre d'exemple, sur la [Fig.8] illustrant un cas où l'organe de serrage s'approche d'un organe de friction, dit cas de serrage, la position de la course de l'organe de serrage est atteinte au bout de 0,5 seconde.

Ensuite, on continue à relever la position de la course de l'organe de serrage (étape 304) et, à partir de ce moment, en référence à la [Fig.9], on estime la valeur de la force de serrage ou de desserrage Fs de l'organe de serrage en fonction de la position de l'organe de serrage à partir de paramètres de référence, en utilisant la relation (1) ci-dessus (étape 600).

On enregistre les positions successives de l'organe de serrage et les forces correspondantes de serrage ou de desserrage (étape 700) en comparant la force de serrage ou de desserrage à un seuil de force prédéterminé (étape 802). Lorsque la force de serrage de desserrage franchit le seuil prédéterminé, l'enregistrement de la force de serrage ou de desserrage est interrompu.

En effet, sur la [Fig.9] illustrant l'évolution de la force de serrage en fonction du temps, on voit que, au bout d'environ 0,8 seconde, la force de serrage atteint sa valeur maximale (environ 12 kN). Ainsi, l'abaque a été créé (étape 900, voir [Fig.10]) et l'enregistrement des positions successives de l'organe de serrage et des forces correspondantes de serrage ou de desserrage dans l'abaque est interrompu.

En se référant à nouveau à la [Fig.8], on voit qu'une discontinuité est observée à 0,8 seconde, soit à environ 1,1 mm de la course de l'organe de serrage. La partie de la courbe entre 1,1 mm et 1,5 mm correspond à un rattrapage de jeu et non à un déplacement de l'organe de serrage, les garnitures 12 étant appuyées contre l'organe de friction.

Avantageusement, les valeurs entre 1,1 mm et 1,5 mm (après 0,8 seconde) ne sont pas prises en compte dans l'abaque qui vient d'être créé. Bien entendu, on a compensé toutes les forces élastiques au moment de l'estimation de la force de serrage, en particulier pour le frein à disque 60.

Si un abaque a été déjà créé, on relève la vitesse et les positions de l'organe de serrage (étape 306) en vue de déduire la valeur correspondante de la force de serrage ou de desserrage à partir de l'abaque (étape 500) jusqu'à ce que la force de serrage ou de desserrage franchisse un seuil de force prédéterminé (étape 804).

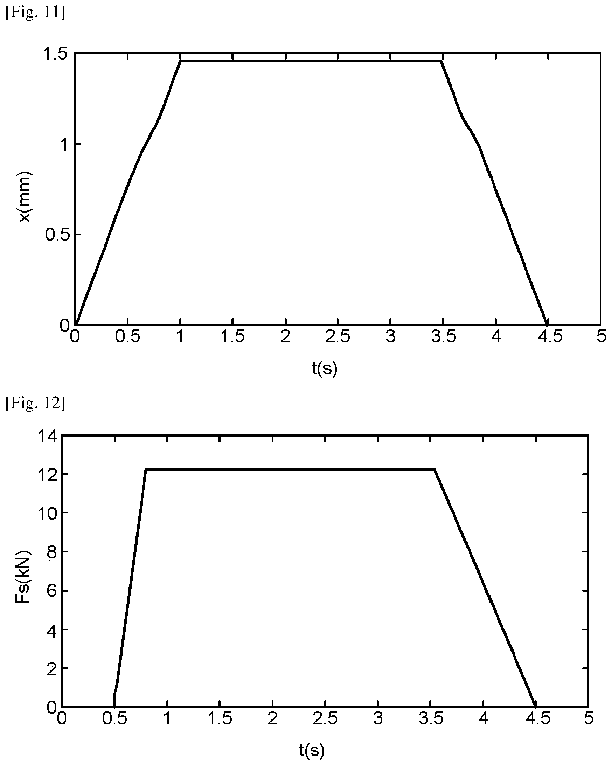

On a représenté sur la [Fig.11] un exemple d'évolution de la position de l'organe de serrage lors d'une opération de serrage et de de desserrage de frein, en fonction du temps.

Sur la [Fig.11], le serrage est présenté de 0 à 1 seconde et le maintien de la position de serrage de 1 à 3,5 secondes, puis le desserrage est présenté de 3,5 secondes à 4,5 secondes. Sur cette figure, les discontinuités sont visibles et présentes à environ 0,8 seconde pendant le serrage et à 3,7 secondes pendant le desserrage. Ces discontinuités marquent le franchissement de seuils de forces prédéterminés comme cela a été observé plus haut sur la [Fig.8].

Sur la [Fig.12], la force de serrage est déduite à partir de 0,5 seconde en utilisant l'abaque déjà créé et à partir de la position de l'organe de serrage de la [Fig.11]. La courbe de la force de serrage et de desserrage ainsi obtenue est lissée par l'utilisation de l'abaque.

Ainsi, les discontinuités ne sont plus visibles sur la [Fig.12] et la force de serrage est présentée entre 0,5 seconde et 0,8 seconde, et la force de desserrage est présentée entre environ 3,7 et 4,5 secondes. Pour l'intervalle de temps pendant lequel la force de serrage n'est pas enregistrée (entre environ 0,8 à environ 3,7 secondes), c'est la valeur de la position de l'organe de serrage à la position de butée en serrage (à environ 1,1 mm) qui est prise en compte pour le calcul de la force de maintien de serrage.

De préférence, on prévoit de mettre à jour l'abaque de façon périodique après un nombre prédéterminé d'activation du frein ou de désactivation du frein entre chaque mise à jour de l'abaque.

Bien entendu, le procédé de commande décrit ci-dessus pourra être mis en œuvre par un dispositif de commande d'un frein de véhicule automobile comprenant, par exemple, un support d'enregistrement de moyens logiciel tels qu'un programme d'ordinateur destiné à réaliser les étapes du procédé.

L'invention n'est pas limitée aux modes de réalisation présentés et d'autres modes de réalisation apparaîtront clairement à l'homme du métier.

Le procédé selon l'invention peut être également mis en œuvre par un dispositif de freinage d'urgence, par exemple électromécanique, activé automatiquement ou manuellement via un actionneur classique.

**Liste de références**

2 : frein à tambour
4 : tambour
6 : plateau
8, 10 : segments
12 : garniture
14 : piste de frottement
16 : organe d'actionnement hydraulique du frein à tambour
18 : organe d'actionnement électromécanique du frein à tambour

20, 22 : première extrémité (fixe) de chaque segment

24 : élément solidaire du plateau

26, 28 : seconde extrémité (mobile) de chaque segment

30 : ensemble vis-écrou du frein à tambour

32 : moteur électrique

34 : arbre du moteur électrique

36 : moyens de transmission de mouvement du frein à tambour

38 : écrou du frein à tambour

39 : denture extérieure de l'écrou du frein à tambour

40 : vis du frein à tambour

42 : premier train épicycloïdal

44 : entrée du premier train épicycloïdal

46 : première cascade intermédiaire

48 : entrée de la première cascade intermédiaire

50 : deuxième train épicycloïdal

52 : entrée du deuxième train épicycloïdal

54 : deuxième cascade intermédiaire

56 : entrée de la deuxième cascade intermédiaire

60 : frein à disque

62 : étrier

64 : cavité axiale

66 : piston

68 : face transversale externe du piston

70 : organe d'actionnement électromécanique du frein à disque

72 : boîtier

74 : face transversale ouverte du boîtier

76 : engrenages à train épicycloïdal

78 : premier logement du boîtier

80 : deuxième logement du boîtier

81 : paroi annulaire de fond du premier logement

82 : orifice central du premier logement

84 : ensemble vis/écrou du frein à disque

86 : vis d'entraînement du frein à disque

88 : écrou de poussée du frein à disque

90 : tête d'entraînement

92 : premier bloc schématisant le moteur électrique du frein

94 : deuxième bloc schématisant les moyens de transmission du frein

96 : troisième bloc schématisant l'ensemble vis/écrou du frein

98 : quatrième bloc schématisant les forces élastiques habituelles d'éléments du frein

100 : Étape de la vérification de l'activation ou de la désactivation du frein

200 : Étape de la vérification de la création d'un abaque

302, 304 ; 306 : Étape du relevé de la vitesse et de la position de l'organe de serrage

400 : Étape de la vérification de la fin de course de l'organe de serrage

500 : Étape de l'estimation de la force de serrage ou de desserrage partir de l'abaque

600 : Étape de l'estimation de la force de serrage ou de desserrage en fonction de la position de serrage de l'organe de serrage à partir de paramètre de références

700 : Étape de l'enregistrement des positions successives de l'organe de serrage et des forces correspondantes de serrage ou de desserrage

802 ; 804 : Étape de la comparaison de la force de serrage ou de desserrage par rapport à un seuil de force prédéterminé

900 : Étape de la création d'un abaque comprenant les valeurs de positions de l'organe de serrage et les valeurs de forces de serrage ou de desserrage.

**Revendications**

1. Procédé de commande d'un frein (2 ; 60) de véhicule automobile, ce frein (2 ; 60) comportant :

- au moins une garniture de frein (12) destinée à coopérer avec un organe de friction du frein (14) ;
- un organe de serrage (8,10 ; 66) de la garniture (12) contre l'organe de friction (14) activé par un moteur électrique (32) ;

dans lequel, lors d'une étape d'activation ou de désactivation du frein (2 ; 60),

on crée ou on met à jour un abaque établissant une correspondance entre une position liée à une position de l'organe de serrage, dite position de l'organe de serrage (8,10 ; 66), et une force de serrage ou de desserrage de l'organe de serrage (8,10 ; 66), en calculant (600) la position de l'organe de serrage (8,10 ; 66) et la force de serrage à partir de paramètres de fonctionnement d'éléments d'une chaîne cinématique reliant un arbre (34) du moteur (32) à l'organe de serrage (8,10 ; 66), dits paramètres de référence,

**caractérisé en ce que** la mise à jour de l'abaque se fait périodiquement après un nombre prédéterminé d'activation du frein (2 ; 60) ou de désactivation du frein (2 ; 60) entre chaque mise à jour de l'abaque.

2. Procédé de commande selon la revendication 1, dans lequel les paramètres de référence comprennent la tension d'alimentation du moteur (32), le courant d'alimentation du moteur (32) et des paramètres mécaniques du moteur (32).

3. Procédé de commande selon l'une quelconque des revendications précédentes, dans lequel le frein (2 ;60) comprend des moyens de transmission de mouvement (36) reliant l'arbre (34) du moteur (32) à l'organe de serrage (8,10 ; 66), ces moyens de transmission de mouvement (36) comprenant un ensemble vis/écrou (30 ; 84) transformant le mouvement de rotation issu de l'arbre (34) du moteur (32) en mouvement de translation de l'organe de serrage (8, 10 ; 66), les paramètres de référence comprenant de plus un rapport entre la rotation de la vis (40 ; 86) et le déplacement de l'écrou (38 ; 88), dit rapport de pas de vis ou un rapport entre la rotation de l'écrou (38 ; 88) et le déplacement de la vis (40 ; 86), dit rapport de pas d'écrou.

4. Procédé de commande selon la revendication 3, dans lequel les moyens de transmission de mouvement (36) comprennent des moyens à engrenages (42, 46, 50, 54 ;76) de démultiplication du mouvement entre l'arbre (34) du moteur (32) et la vis (40 ; 86) ou l'écrou (38 ; 88) de l'ensemble vis/écrou (30 ; 84), les paramètres de référence comprenant de plus un rapport de démultiplication associé aux moyens de démultiplication (42, 46, 50, 54 ;76).

5. Procédé de commande selon l'une quelconque des revendications précédentes, dans lequel lors d'une étape d'activation ou de désactivation du frein (2 ; 60), on estime (500) la valeur de la force de serrage ou de desserrage de l'organe de serrage (8 ; 10, 66) en fonction de la position de l'organe de serrage (8 ; 10, 66) et de la valeur correspondante de la force de serrage ou de desserrage donnée par l'abaque.

6. Procédé de commande selon l'une quelconque des revendications précédentes, dans lequel on crée ou on met à jour l'abaque en calculant (600) des positions successives de l'organe de serrage (8 ; 10, 66) et des forces de serrage ou de desserrage correspondantes à partir des paramètres de référence, en enregistrant (700) les positions successives de l'organe de serrage (8 ; 10, 66) et les forces correspondantes de serrage ou de desserrage et en comparant (802, 804) la force de serrage ou de desserrage à un seuil prédéterminé, l'enregistrement des positions successives de l'organe de serrage et des forces correspondantes de serrage ou de desserrage étant interrompu lorsque la force de serrage ou de desserrage franchit le seuil prédéterminé.

7. Dispositif de commande d'un frein (2 ; 60) de véhicule automobile, **caractérisé en ce qu'**il comprend des moyens mettant en œuvre un procédé selon l'une quelconque des revendications précédentes, par exemple un support d'enregistrement de moyens logiciels.

8. Dispositif de commande selon la revendication 7, dans lequel le frein (2 ;60) est un frein à tambour (2) ou un frein à disque (60), ce frein (2 ; 60) étant apte à fonctionner en mode électromécanique et/ou hydraulique.

**Patentansprüche**

1. Verfahren zur Steuerung einer Bremse (2; 60) eines Kraftfahrzeugs, wobei diese Bremse (2; 60) Folgendes aufweist:

- wenigstens einen Bremsbelag (12), der für das Zusammenwirken mit einem Reibungselement (14) der Bremse vorgesehen ist;
- ein Spannelement zum Spannen (8, 10; 66) des Belags (12) gegen das Reibungselement (14), das durch einen Elektromotor (32) aktiviert wird;

wobei, in einem Schritt des Aktivierens oder des Deaktivierens der Bremse (2; 60),

ein Diagramm erzeugt oder aktualisiert wird, das eine Zuordnung zwischen einer Position, die mit einer Position des Spannelements, so genannte Position des Spannelements (8, 10; 66), verknüpft ist, und einer Kraft zum Spannen oder zum Lösen des Spannelements (8, 10; 66) herstellt, indem die Position des Spannelements (8, 10; 66) und die Spannkraft ausgehend von Betriebsparametern von Elementen einer kinematischen Kette, die eine Welle (34) des Motors (32) mit dem Spannelement (8, 10; 66) verbindet, so genannte Referenzparameter, berechnet (600) wird,

**dadurch gekennzeichnet, dass** die Aktualisierung des Diagramms periodisch nach einer vorbestimmten Anzahl an Aktivierungen der Bremse (2; 60) oder an Deaktivierungen der Bremse (2; 60) zwischen jeder Aktualisierung des Diagramms erfolgt.

2. Steuerungsverfahren nach Anspruch 1, wobei die Referenzparameter die Versorgungsspannung des Motors (32, den Versorgungsstrom des Motors (32) und mechanische Parameter des Motors (32) umfassen.

3. Steuerungsverfahren nach einem der vorhergehenden Ansprüche, wobei die Bremse (2; 60) Bewegungsübertragungsmittel (36) umfasst, die die Welle (34) des Motors (32) mit dem Spannelement (8, 10; 66) verbinden, wobei diese Bewegungsübertragungsmittel (36) einen Schrauben-Mutter-Satz (30; 84) umfassen, der die Rotationsbewegung von der Welle (34) des Motors (32) in eine Translationsbewegung des Spannelements (8, 10; 66) umwandelt, wobei die Referenzparameter des Weiteren ein Verhältnis zwischen der Rotation der Schraube (40; 86) und der Bewegung der Mutter (38; 88), so genanntes Schraubensteigungsverhältnis, oder ein Verhältnis zwischen der Rotation der Mutter (38; 88) und der Bewegung der Schraube (40; 86), so genanntes Muttersteigungsverhältnis, umfassen.

4. Steuerungsverfahren nach Anspruch 3, wobei die Bewegungsübertragungsmittel (36) Getriebemittel (42, 46, 50, 54; 76) zum Untersetzen der Bewegung zwischen der Welle (34) des Motors (32) und der Schraube (40; 86) oder der Mutter (38; 88) des Schrauben-Mutter-Satzes (30; 84) umfassen, wobei die Referenzparameter des Weiteren ein Untersetzungsverhältnis umfassen, das den Untersetzungsmitteln (42, 46, 50, 54; 76) zugeordnet ist.

5. Steuerungsverfahren nach einem der vorhergehenden Ansprüche, wobei in einem Schritt des Aktivierens oder des Deaktivierens der Bremse (2; 60) der Wert der Kraft zum Spannen oder zum Lösen des Spannelements (8; 10, 66) in Abhängigkeit von der Position des Spannelements (8; 10, 66) und von dem zugeordneten Wert der Spann- oder Lösekraft, die das Diagramm angibt, geschätzt (500) wird.

6. Steuerungsverfahren nach einem der vorhergehenden Ansprüche, wobei das Diagramm erzeugt oder aktualisiert wird, indem die nachfolgenden Positionen des Spannelements (8, 10; 66) und der zugeordneten Spann- oder Lösekräfte anhand der Referenzparameter berechnet (600) werden, indem die nachfolgenden Positionen des Spannelements (8, 10; 66), und der zugeordneten Spann- oder Lösekräfte aufgezeichnet (700) werden und indem die Spann- oder Lösekraft mit einem vorbestimmten Schwellwert verglichen (802, 804) wird, wobei das Aufzeichnen der nachfolgenden Positionen des Spannelements und der zugeordneten Spann- oder Lösekräfte unterbrochen wird, wenn die Spann- oder Lösekraft den vorbestimmten Schwellwert überschreitet.

7. Vorrichtung zur Steuerung einer Bremse (2; 60) eines Kraftfahrzeugs, **dadurch gekennzeichnet, dass** es Mittel zur Durchführung eines Verfahrens nach einem der vorhergehenden Ansprüche, zum Beispiel ein Medium zur Aufzeichnung von Softwaremitteln, umfasst.

8. Steuerungsvorrichtung nach Anspruch 7, wobei die Bremse (2; 60) eine Trommelbremse (2) oder eine Scheibenbremse (60) ist, wobei diese Bremse (2; 60) im elektromechanischen und/oder hydraulischen Modus betreibbar ist.

**Claims**

1. Method for controlling a motor vehicle brake (2; 60), this brake (2; 60) comprising:

- at least one brake lining (12) intended to cooperate with a brake friction member (14);
- a clamping member (8, 10; 66) for clamping the lining (12) against the friction member (14) activated by an electric motor (32);
wherein, during a step of activating or deactivating the brake (2; 60),
a chart establishing a mapping between a position linked to a position of the clamping member, called position of the clamping member (8, 10; 66), and a clamping or unclamping force of the clamping member (8, 10; 66) is created or updated, by calculating (600) the position of the clamping member (8, 10; 66) and the clamping force using operating parameters of elements of a kinematic chain connecting a shaft (34) of the motor (32) to the clamping member (8, 10; 66), called reference parameters,

**characterised in that** the chart is updated periodically after a predetermined number of activations of the brake (2; 60) or of deactivations of the brake (2; 60) between each update of the chart.

2. Method for controlling according to claim 1, wherein the reference parameters comprise the power supply voltage of the motor (32), the power supply current of the motor (32) and mechanical parameters of the motor (32).

3. Method for controlling according to any one of the preceding claims, wherein the brake (2; 60) comprises movement transmission means (36) connecting the shaft (34) of the motor (32) to the clamping member (8, 10; 66), these movement transmission means (36) comprising a screw/nut assembly (30; 84) transforming the rotational movement from the shaft (34) of the motor (32) into translational movement of the clamping member (8, 10; 66), the reference parameters also comprising a ratio between the rotation of the screw (40; 86) and the displacement of the nut (38; 88), called screw pitch ratio or a ratio between the rotation of the nut (38; 88) and the dis placement of the screw (40; 86), called nut pitch ratio.

4. Method for controlling according to claim 3, wherein the movement transmission means (36) comprise gear means (42, 46, 50, 54; 76) for reducing the movement between the shaft (34) of the motor (32) and the screw (40; 86) or the nut (38; 88) of the screw/nut assembly (30; 84), the reference parameters also comprising a reduction ratio associated with the reduction means (42, 46, 50, 54; 76).

5. Method for controlling according to any one of the preceding claims, wherein during a step of activating or deactivating the brake (2; 60), the value of the clamping or unclamping force of the clamping member (8; 10, 66) is estimated (500) according to the position of the clamping member (8; 10, 66) and the corresponding value of the clamping or unclamping force given by the chart.

6. Method for controlling according to any one of the preceding claims, wherein the chart is created or updated by calculating (600) successive positions of the clamping member (8; 10, 66) and corresponding clamping or unclamping forces using reference parameters, by recording (700) the successive positions of the clamping member (8; 10, 66) and the corresponding clamping or unclamping forces and by comparing (802, 804) the clamping or unclamping force with a predetermined threshold, the recording of the successive positions of the clamping member and of the corresponding clamping or unclamping forces being interrupted when the clamping or unclamping force crosses the predetermined threshold.

7. Device for controlling a motor vehicle brake (2; 60), **characterised in that** it comprises means implementing a method according to any one of the preceding claims, for example a medium for recording software means.

8. Device for controlling according to claim 7, wherein the brake (2; 60) is a drum brake (2) or a disc brake (60), this brake (2; 60) being capable of operating in electromechanical and/or hydraulic mode.

EP 4 132 823 B1

[Fig. 1]

12

[Fig. 2]

[Fig. 3]

[Fig. 4]

[Fig. 5]

[Fig. 6]

[Fig. 7]

[Fig. 8]

[Fig. 9]

[Fig. 10]

| x(mm) | Fs(kN) |
|--------|--------|
| 0.7944 | 1 |
| 0.7993 | 1.1 |
| 0.8028 | 1.2 |
| ⋮ | ⋮ |
| 1.141 | 12.3 |

[Fig. 11]

[Fig. 12]

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012193177 A1
- FR 3031151 A
- FR 2999509 A
- US 2016103430 A1